# EUROPEAN PATENT APPLICATION

(11) **EP 3 095 994 A1**
(43) Date of publication of application: **23.11.2016**
(21) Application number: 15001511.3
(22) Date of filing: 20.05.2015
(51) Int. Cl.: F02M 21/02, F02D 19/02, F02D 41/00

(54) **SYSTEM AND METHOD FOR SUPPLYING GASEOUS FUEL TO AN ENGINE**

(71) Applicant: Caterpillar Energy Solutions GmbH, 68167 Mannheim (DE)
(72) Inventor: Snuis, Hans-Bernhard, Peoria, Illinois 61629-9510 (US)
(74) Representative: Kramer Barske Schmidtchen Patentanwälte PartG mbB

(57) **Abstract**

A fuel supply system (100) of an engine (102) is disclosed. The fuel supply system (100) includes a gas mixer (106) for mixing a gaseous fuel and air, a first pressure regulator (116) for regulating a pressure of the gaseous fuel received from a gaseous fuel reservoir (104) and a second pressure regulator (122) for regulating a pressure of the gaseous fuel received from the first pressure regulator (116). A control valve (130) is disposed between the first pressure regulator (116) and the gas mixer (106) parallel to the second pressure regulator (122) to allow the gaseous fuel from the first pressure regulator (116) to the gas mixer (106). A controller (140) is communicably coupled to the control valve (130). The controller (140) receives signals indicative of a load acting on the engine (102) and determines the load based on the received signals. The controller (140) further regulates the control valve (130) to control a flow of the gaseous fuel into the gas mixer (106) based on the determined load.

## Description

### Technical Field

The present disclosure relates to a fuel supply system of an engine, and more particularly relates to the fuel supply system and a method of supplying gaseous fuel to the engine.

### Background

Generally, gaseous fuel engines, running on gaseous fuels, such as natural gas, coal gas, biogas, and the like, include a fuel supply system for supplying a mixture of the gaseous fuel and air to the engine. The fuel supply system includes a gas mixer for mixing the gaseous fuel and the air based on a desired air-fuel ratio. The air-fuel ratio may vary based on a load acting on the engine. The fuel supply system further includes an inlet pressure regulator and a zero pressure regulator to regulate a pressure of the gaseous fuel flowing into the gas mixer. The zero pressure regulator may reduce a pressure of the gaseous fuel close to a pressure of the air received in the gas mixer. During an operation of the engine, a load acting on the engine may vary from low load to high load and vice versa. During such sudden change to high load, an amount of the gaseous fuel received within the gas mixer, from the zero pressure regulator, may not be sufficient to achieve the desired air-fuel ratio for the high load condition of the engine. This may cause engine stalling and/or may lead to inefficiency in engine operation.

### Summary of the Disclosure

In one aspect of the present disclosure, a fuel supply system of an engine is provided. The fuel supply system includes a gaseous fuel line in communication with a gaseous fuel reservoir and a gas mixer. The gas mixer is configured to mix a gaseous fuel and air. The fuel supply system includes a first pressure regulator disposed in the gaseous fuel line. The first pressure regulator is configured to regulate a pressure of the gaseous fuel received from the gaseous fuel reservoir. The fuel supply system further includes a second pressure regulator disposed in the gaseous fuel line between the first pressure regulator and the gas mixer. The second pressure regulator is configured to further regulate a pressure of the gaseous fuel received from the first pressure regulator. The second pressure regulator is further configured to reduce a pressure of the gaseous fuel substantially equal to a pressure of the air. The fuel supply system further includes a control valve disposed between the first pressure regulator and the gas mixer parallel to the second pressure regulator. The control valve is configured to selectively allow a flow of the gaseous fuel from the first pressure regulator to the gas mixer. The fuel supply system further includes a controller communicably coupled to the control valve. The controller is configured to receive signals indicative of a load acting on the engine and determine the load acting on the engine based on the received signals. The controller is further configured to regulate the control valve to control a flow of the gaseous fuel into the gas mixer based on the determined load.

In another aspect of the present disclosure, a method of supplying gaseous fuel to an engine is provided. The engine includes a gas mixer configured to mix a gaseous fuel and air therein and a first pressure regulator configured to regulate a pressure of the gaseous fuel received from a gaseous fuel reservoir. The method includes receiving signals indicative of a load acting on the engine and determining the load acting on the engine based on the received signals. The method further includes regulating a control valve to control a flow of the gaseous fuel into the gas mixer based on the determined load. The control valve is disposed parallel to a second pressure regulator. The control valve and the second pressure regulator are disposed between the first pressure regulator and the gas mixer.

Other features and aspects of this disclosure will be apparent from the following description and the accompanying drawings.

### Brief Description of the Drawings

FIG. 1 is a block diagram of a fuel supply system of an engine, according to an embodiment of the present disclosure; and
FIG. 2 is a flowchart of a method of supplying gaseous fuel to the engine, according to an embodiment of the present disclosure.

### Detailed Description

Reference will now be made in detail to specific embodiments or features, examples of which are illustrated in the accompanying drawings. Wherever possible, corresponding or similar reference numbers will be used throughout the drawings to refer to the same or corresponding parts.

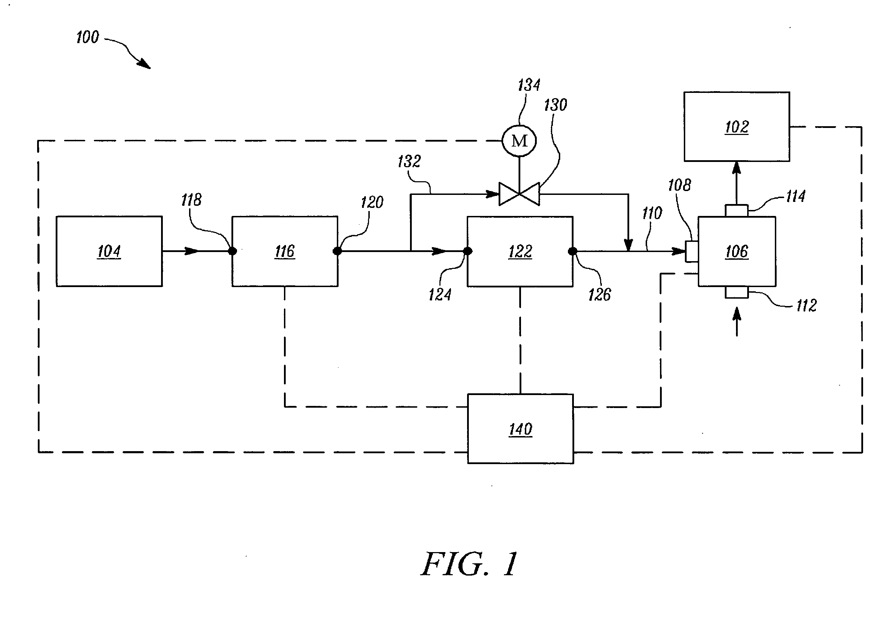

FIG. 1 illustrates a block diagram of a fuel supply system 100 of an engine 102, according to an embodiment of the present disclosure. In the illustrated embodiment, the engine 102 is a gaseous fuel engine. The engine 102 may be propelled by gaseous fuels such as, natural gases, propane, methane, hydrogen, and the like. Further, the engine 102 may be used in a generator set. However, the engine 102 may also be used in various other applications, such as machines used in various industries, such as construction, mining, agriculture and the like. In another embodiment, the engine 102 may also use a liquid fuel such as, for example, gasoline or diesel during start of the engine 102.

In an exemplary embodiment, the engine 102 may include a cylinder block (not shown) and a cylinder head (not shown) coupled to the cylinder block. The engine 102 may further include a single cylinder or multiple cylinders. In the case of multiple cylinders, the cylinders may be arranged in various configurations within the cylinder block such as, inline configuration, rotary configuration, v-type configuration, and the like. The cylinder head may include one or more intake ports and one or more exhaust ports. The one or more intake ports may be in fluid communication with the cylinder. The engine 102 may further include an intake manifold coupled to the one or more intake ports to supply a mixture of gaseous fuel and air into the cylinder. The one or more exhaust ports may be in fluid communication with the cylinder to discharge exhaust gas from the cylinder. An exhaust manifold may be coupled to the one or more exhaust ports to discharge the exhaust gas therethrough.

The fuel supply system 100 of the engine 102 includes a gaseous fuel reservoir 104 configured to be in communication with the engine 102 to supply the gaseous fuel. The gaseous fuel reservoir 104 may store the gaseous fuel at a desired temperature and a desired pressure depending on specification of the engine 102 and applications of the engine 102.

The fuel supply system 100 further includes a gas mixer 106 configured to be in communication with the gaseous fuel reservoir 104 and the engine 102. Moreover, the gas mixer 106 is configured to receive air. In an exemplary embodiment, the gas mixer 106 may include a first inlet 108 fluidly coupled to a gaseous fuel line 110. The gaseous fuel line 110 receives the gaseous fuel from the gaseous fuel reservoir 104 therethrough. The gas mixer 106 further includes a second inlet 112 configured to receive air therethrough. Thus the gas mixer 106 is configured to receive the gaseous fuel and the air therein to mix the gaseous fuel and the air before supplying the mixture of the gaseous fuel and the air into the cylinder of the engine 102. In various examples, one or more control valves may be disposed in the second inlet 112 to control a flow of the air into the gas mixer 106. The gas mixer 106 further includes an outlet 114 configured to be in communication with the engine 102 to supply the mixture of the gaseous fuel and the air into the cylinder of the engine 102. Specifically, the outlet 114 of the gas mixer 106 may be fluidly coupled to the inlet manifold of the engine 102 to supply the mixture of the gaseous fuel and the air via the intake manifold.

The fuel supply system 100 further includes a first pressure regulator 116 disposed in the gaseous fuel line 110. In an exemplary embodiment, the first pressure regulator 116 includes an inlet port 118 fluidly coupled to the gaseous fuel reservoir 104 via the gaseous fuel line 110 to receive the gaseous fuel therethrough. The first pressure regulator 116 further includes an outlet port 120 fluidly coupled to the gas mixer 106 via the gaseous fuel line 110. The first pressure regulator 116 is configured to regulate a pressure of the gaseous fuel that is received from the gaseous fuel reservoir 104. Specifically, the first pressure regulator 116 decreases a pressure of the gaseous fuel that is received from the gaseous fuel reservoir 104. Thus, a pressure of the gaseous fuel at upstream of the first pressure regulator 116 is higher than a pressure of the gaseous fuel at downstream of the first pressure regulator 116.

The fuel supply system 100 further includes a second pressure regulator 122 disposed in the gaseous fuel line 110. In an exemplary embodiment, the second pressure regulator 122 includes an inlet port 124 fluidly coupled to the first pressure regulator 116 via the gaseous fuel line 110 to receive the gaseous fuel therefrom. The second pressure regulator 122 further includes an outlet port 126 fluidly coupled to the gas mixer 106 via the gaseous fuel line 110. The second pressure regulator 122 is configured to regulate a pressure of the gaseous fuel that is received from the first pressure regulator 116. Specifically, the second pressure regulator 122 is configured to reduce a pressure of the gaseous fuel substantially equal to a pressure of the air. Thus, a pressure of the gaseous fuel at upstream of the second pressure regulator 122 is higher than a pressure of the gaseous fuel at downstream of the second pressure regulator 122.

The fuel supply system 100 further includes a control valve 130 disposed in a bypass gaseous fuel line 132 between the first pressure regulator 116 and the gas mixer 106. As illustrated in FIG. 1, the control valve 130 is disposed parallel to the second pressure regulator 122. The control valve 130 is configured to selectively allow a flow of the gaseous fuel into the gas mixer 106 based on actuation of the control valve 130. Thus, a flow of the gaseous fuel from the first pressure regulator 116 is controlled in the bypass gaseous fuel line 132, apart from a flow of the gaseous fuel through the second pressure regulator 122, based on actuation of the control valve 130. In the illustrated embodiment, one control valve 130 is disposed in the bypass gaseous fuel line 132. However, it may be contemplated that more than one similar or different control valves 130 may be disposed in the bypass gaseous fuel line 132 to control a flow of the gaseous fuel through the bypass gaseous fuel line 132.

In an embodiment, the control valve 130 is an electromechanical valve. The control valve 130 includes an electric motor 134 configured to actuate the control valve 130 between an open position and a closed position thereof. Normally, the control valve 130 may be biased to the closed position. In other embodiments, the control valve 130 may be selected from a pneumatically driven valve, a hydraulically driven valve, and the like.

The fuel supply system 100 further includes a controller 140. The controller 140 is configured to be in communication with the engine 102 to determine various operating parameters of the engine 102, such as a speed of the engine 102, an oil pressure and an oil temperature. A plurality of sensors may be disposed in the engine 102 to generate signals indicative of the various operating parameters of the engine 102. The controller 140 may communicate with the plurality of sensors to receive the signals indicative of respective operating parameters of the engine 102.

In the case of a generator set, the controller 140 may be in communication with another controller that may be used for determining various operating parameters of a generator coupled to the engine 102. In an example, the controller 140 may be an Electronic Control Module (ECM). Thus, the controller 140 is configured to determine a load acting on the engine 102 based on the signals received from the plurality of sensors corresponding to the various operating parameters of the engine 102. Further, the controller 140 may determine the load acting on the engine 102 based on operating parameters of the generator. In various embodiments, a load acting on the engine 102 may be determined based on the applications thereof.

The controller 140 is further configured to be in communication with the fuel supply system 100 of the engine 102 to supply the mixture of the gaseous fuel and the air into the cylinder of the engine 102 based on the determined load. In an embodiment, the controller 140 is configured to be in communication with the gas mixer 106 to determine an air-fuel ratio. Further, a flow of the gaseous fuel and the air into the gas mixer 106 may be controlled based on the determined air-fuel ratio. The controller 140 may also communicate with the one or more control valves disposed adjacent to the second inlet 112 to control a flow of the air into the gas mixer 106. Thus, the flow of the gaseous fuel and the air into the gas mixer 106 may be controlled based on a load acting on the engine 102 or a no-load condition of the engine 102. In an example, one or more sensors may be disposed in the gas mixer 106 to generate signals indicative of a flow rate of the gaseous fuel and the air into the gas mixer 106. The sensors may further communicate with the controller 140. Thus, the air-fuel ratio may be determined based on an amount of the gaseous fuel received within the gas mixer 106 from the second pressure regulator 122 and an amount of the air received within the gas mixer 106. In another example, the air-fuel ratio may be determined based on the load acting on the engine 102 or the no-load condition of the engine 102. The controller 140 is further configured to be in communication with the first pressure regulator 116 and the second pressure regulator 122 to regulate a pressure of the gaseous fuel that flows through the gaseous fuel line 110 based on the load acting on the engine 102 or the no-load condition of the engine 102.

In an embodiment, the controller 140 is further configured to be in communication with the control valve 130. Specifically, the controller 140 is configured to be in communication with the electric motor 134 of the control valve 130. During a high load condition of the engine 102, the gaseous fuel received within the gas mixer 106 through the second pressure regulator 122 may not be sufficient to define a desired air-fuel ratio for such a high load condition. In such a case, the controller 140 regulates the electric motor 134 of the control valve 130 based on the load determined by the controller 140. The electric motor 134 further moves the control valve 130 from the closed position to the open position to allow a flow of the gaseous fuel from the first pressure regulator 116 into the gas mixer 106. Opening of the control valve 130 is determined based on the load determined by the controller 140. In another embodiment, the controller 140 may control the flow of the gaseous fuel through the control valve 130 based on an air-fuel ratio determined at the high load condition of the engine 102. Thus, the gaseous fuel is supplied to the gas mixer 106 at a pressure higher than a pressure of the gaseous fuel downstream of the second pressure regulator 122. The supply of the gaseous fuel at the higher pressure serves to enrich a mixture of the gaseous fuel and the air within the gas mixer 106. Hence, the desired air-fuel ratio required for the high load condition is achieved by supplying the gaseous fuel from the first pressure regulator 116 to the gas mixer 106 bypassing the second pressure regulator 122.

In another embodiment, the controller 140 is configured to be in communication with the first pressure regulator 116 to regulate the pressure of the gaseous fuel based on the air-fuel ratio within the gas mixer 106 during the high load condition of the engine 102.

### Industrial Applicability

The present disclosure relates to the fuel supply system 100 and a method 200 of supplying gaseous fuel to the engine 102. During the high load condition of the engine 102, the controller 140 actuates the control valve 130 to allow the flow of gaseous fuel from the first pressure regulator 116 to the gas mixer 106 bypassing the second pressure regulator 122. Thus, the mixture of gaseous fuel and the air within the gas mixer 106 is enriched by the gaseous fuel received through the bypass gaseous fuel line 132 to meet the desired air-fuel ratio required for the high load condition of the engine 102. Further, the air-fuel ratio required for a sudden change of the load to the high load condition during operation of the engine 102 may be achieved by bypassing the second pressure regulator 122 and supplying the gaseous fuel at a pressure higher than the pressure of the gaseous fuel downstream of the second pressure regulator 122.

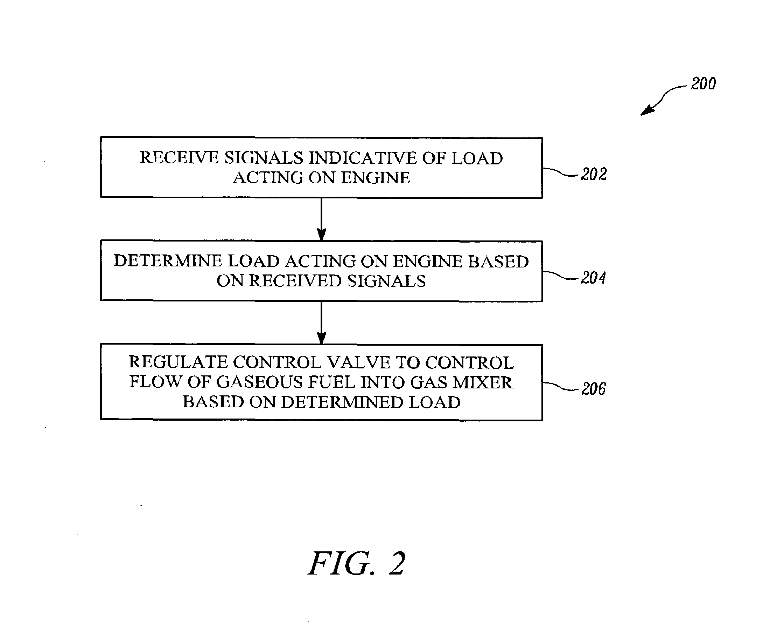

Referring to FIGS. 1 and 2, at step 202, the method 200 includes receiving signals indicative of the load acting on the engine 102. The controller 140 in communication with the plurality of sensors corresponding to the various operation parameters of the engine 102 may receive signals indicative of the load of the engine 102. The engine operating parameters, such as the speed of the engine 102, the oil temperature and the pressure of the engine 102 may vary based on the load acting on the engine 102. In other embodiments, the controller 140 may receive signals indicative of the operating parameter of a power conversion device, such as the generator, to determine the load acting on the engine 102.

At step 204, the method 200 includes determining the load acting on the engine 102 based on the received signals. The controller 140 further determines the load acting on the engine 102 based on the signals received from the plurality of sensors associated with the various operating parameters of the engine 102 and the power conversion device.

At step 206, the method 200 includes regulating the control valve 130 to control the flow of the gaseous fuel into the gas mixer 106 based on the determined load. The controller 140, disposed in communication with the control valve 130, may actuate the control valve 130 to move from the closed position to the open position based on the determined load. Thus, the gaseous fuel from the first pressure regulator 116 flows through the bypass gaseous fuel line 132 into the gas mixer 106 by bypassing the second pressure regulator 122 to achieve the desired air-fuel ratio required for the load of the engine 102. In another embodiment, the controller 140 may actuate the control valve 130 based on the air-fuel ratio determined within the gas mixer 106. Further, the controller 140 may communicate with the first pressure regulator 116 to regulate the pressure of the gaseous fuel based on the air-fuel ratio determined within the gas mixer 106. Thus, the mixture of the gaseous fuel and the air within the gas mixer 106 is enriched by supplying gaseous fuel from the first pressure regulator 116 into the gas mixer 106 by bypassing the second pressure regulator 122 during the high load condition of the engine 102.

While aspects of the present disclosure have been particularly shown and described with reference to the embodiments above, it will be understood by those skilled in the art that various additional embodiments may be contemplated by the modification of the disclosed systems and methods without departing from the spirit and scope of what is disclosed. Such embodiments should be understood to fall within the scope of the present disclosure as determined based upon the claims and any equivalents thereof.

## Claims

1. A fuel supply system (100) of an engine (102), the fuel supply system (100) comprises a gaseous fuel line (110) in communication with a gaseous fuel reservoir (104) and a gas mixer (106), the gas mixer (106) configured to mix a gaseous fuel and air, the fuel supply system (100) comprising:
a first pressure regulator (116) disposed in the gaseous fuel line (110), the first pressure regulator (116) configured to regulate a pressure of the gaseous fuel received from the gaseous fuel reservoir (104);
a second pressure regulator (122) disposed in the gaseous fuel line (110) between the first pressure regulator (116) and the gas mixer (106), the second pressure regulator (122) configured to further regulate a pressure of the gaseous fuel received from the first pressure regulator (116), wherein the second pressure regulator (122) is further configured to reduce a pressure of the gaseous fuel substantially equal to a pressure of the air;
a control valve (130) disposed between the first pressure regulator (116) and the gas mixer (106) parallel to the second pressure regulator (122), the control valve (130) configured to selectively allow a flow of the gaseous fuel from the first pressure regulator (116) to the gas mixer (106); and
a controller (140) communicably coupled to the control valve (130), the controller (140) configured to:
receive signals indicative of a load acting on the engine (102);
determine the load acting on the engine (102) based on the received signals; and
regulate the control valve (130) to control a flow of the gaseous fuel into the gas mixer (106) based on the determined load.

2. The fuel supply system (100) of claim 1, wherein the controller (140) is further configured to determine an air-fuel ratio based on an amount of the gaseous fuel received within the gas mixer (106) from the second pressure regulator (122) and an amount of the air received within the gas mixer (106).

3. The fuel supply system (100) of claim 2, wherein the controller (140) is further configured to control the flow of the gaseous fuel through the control valve (130) based on the determined air-fuel ratio.

4. The fuel supply system (100) of claim 2, wherein the controller (140) is communicably coupled to the first pressure regulator (116), and wherein the controller (140) is further configured to control the first pressure regulator (116) to regulate pressure of the gaseous fuel based on the determined air-fuel ratio.

5. The fuel supply system (100) of claim 1, wherein the controller (140) is further configured to regulate the control valve (130) to enrich a mixture of the gaseous fuel and the air within the gas mixer (106) during a high load condition of the engine (102), wherein the mixture is enriched by the flow of gaseous fuel from the first pressure regulator (116) into the gas mixer (106) bypassing the second pressure regulator (122).

6. The fuel supply system (100) of claim 1, wherein the controller (140) is further configured to determine the load acting on the engine (102) based on one or more operating parameters of the engine (102).

7. The fuel supply system (100) of claim 1 further comprising a bypass gaseous fuel line (132) disposed between the first pressure regulator (116) and the gas mixer (106), wherein the control valve (130) is disposed in the bypass gaseous fuel line (132) parallel to the second pressure regulator (122).

8. The fuel supply system (100) of claim 1, wherein the control valve (130) is an electromechanical valve.

9. The fuel supply system (100) of claim 1, wherein the control valve (130) is actuated by an electric motor (134).

10. The fuel supply system (100) of claim 9, wherein the electric motor (134) is in communication with the controller (140) to receive signals indicative of the determined load.

11. A method (200) of supplying gaseous fuel to an engine (102), the engine (102) comprises a gas mixer (106) configured to mix a gaseous fuel and air therein and a first pressure regulator (116) configured to regulate a pressure of the gaseous fuel received from a gaseous fuel reservoir (104), the method (200) comprising:
receiving signals indicative of a load acting on the engine (102);
determining the load acting on the engine (102) based on the received signals; and
regulating a control valve (130) to control a flow of the gaseous fuel into the gas mixer (106) based on the determined load, wherein the control valve (130) is disposed parallel to a second pressure regulator (122), and wherein the control valve (130) and the second pressure regulator (122) are disposed between the first pressure regulator (116) and the gas mixer (106).

12. The method (200) of claim 11 further comprising determining an air-fuel ratio based on an amount of the gaseous fuel received within the gas mixer (106) from the second pressure regulator (122) and an amount of the air received within the gas mixer (106).

13. The method (200) of claim 12 further comprising controlling the flow of the gaseous fuel through the control valve (130) based on the determined air-fuel ratio.

14. The method (200) of claim 12 further comprising controlling the first pressure regulator (116) to regulate the pressure of the gaseous fuel based on the determined air-fuel ratio.

15. The method (200) of claim 11 further comprising regulating the control valve (130) to enrich a mixture of the gaseous fuel and the air within the gas mixer (106) during a high load condition of the engine (102), wherein the mixture is enriched by allowing the flow of the gaseous fuel from the first pressure regulator (116) into the gas mixer (106) bypassing the second pressure regulator (122).
